# EUROPÄISCHE PATENTSCHRIFT

(11) **EP 3 084 352 B1**
(45) Veröffentlichungstag und Bekanntmachung des Hinweises auf die Patenterteilung: **12.08.2020**
(21) Anmeldenummer: 14821065.1
(22) Anmeldetag: 16.12.2014
(51) Int. Cl.: G01C 21/34

(54) **SYSTEM ZUR INDIVIDUALISIERTEN STRECKENFÜHRUNG UNTER BERÜCKSICHTIGUNG EXTERNER FAKTOREN**
SYSTEM FOR PERFORMING INDIVIDUALISED ROUTE GUIDANCE TAKING INTO ACCOUNT EXTERNAL FACTORS
SYSTÈME SERVANT À ÉTABLIR UN TRAJET PERSONNALISÉ EN TENANT COMPTE DE FACTEURS EXTÉRIEURS

(30) Priorität: 21.12.2013 DE 102013021846
(43) Veröffentlichungstag der Anmeldung: 26.10.2016
(73) Patentinhaber: Audi AG, 85045 Ingolstadt (DE)
(72) Erfinder: SOFRA, Nikoletta, 85049 Ingolstadt (DE); KELLER, Michael, 85049 Ingolstadt (DE)
(74) Vertreter: Bauer, Dominik Michael
(86) Internationale Anmeldenummer: PCT/EP2014/003363
(87) Internationale Veröffentlichungsnummer: WO 2015/090558

(56) Entgegenhaltungen:
- EP-A1- 2 264 401
- EP-A2- 1 659 369
- WO-A1-02/071338
- US-A1- 2002 082 771
- US-A1- 2009 171 566
- US-A1- 2013 046 456

## Beschreibung

Die vorliegende Erfindung betrifft ein Verfahren und eine Vorrichtung zur Berechnung einer Streckenführung in einem Fahrzeug unter Berücksichtigung von nutzer- und verkehrsrelevanten Daten.

Eine Planung einer Streckenführung für eine Reise in einem Fahrzeug stellt einen komplexen Vorgang dar, bei dem zahlreiche Faktoren, wie bspw. verkehrsrelevante als auch nutzerrelevante Daten zu berücksichtigen sind. Insbesondere bei langen Strecken, die ggf. zwischen verschiedenen Ländern und damit verbundenen jeweiligen Mautsystemen verlaufen, führen in der Regel mehrere Routen bzw. Streckenführungen zu einem jeweiligen Ziel.

Da eine ausschließlich für eine kurze Reisedauer optimierte Streckenführung ggf. zu beträchtlichen Mautkosten führen kann, ist es sinnvoll, einem jeweiligen Nutzer mögliche alternative Streckenführungen bereitzustellen, die für weitere Faktoren, wie bspw. geringe Streckenführungskosten bzw. Mautkosten optimiert sind.

Im Stand der Technik werden Verfahren und Vorrichtungen zur Berechnung von Streckenführungen beschrieben.

In der deutschen Druckschrift DE 101 21 404 A1 wird eine Vorrichtung zur Informationsanzeige in einem Fahrzeug offenbart, mit einer eine Eingabe von Start- und Zielinformationen ermöglichenden Dateneingabevorrichtung, mit einer Straßeninformationen aufweisenden Datenbank, mittels derer eine Streckenberechnungseinheit anhand von Start- und Zielinformationen und in der Datenbank gespeicherten Straßeninformationen eine Fahrtstrecke berechnet und mit einer die berechnete Fahrtstrecke anzeigenden Anzeigeeinheit. Ferner umfasst die Vorrichtung eine Vorrichtung, die neben der reinen Fahrtstrecke weitere Informationen bereitstellt, so dass die Datenbank den Straßeninformationen zugeordnete Zusatzinformationen aufweist und die Anzeigeeinheit beim Anzeigen der Fahrtstrecke die Zusatzinformationen mit anzeigt. Mittels der zusätzlichen Informationen ist es einem Nutzer der Vorrichtung möglich, jeweilige Mautgebühren anhand der Zusatzinformationen abzuschätzen.

In der Druckschrift EP 2 131 152 A2 wird ein Verfahren zum Betrieb eines Fahrerinformationssystems beschrieben. Dabei umfasst das Verfahren die folgenden Schritte: Ermitteln von Streckenführungen, die von einem ausgewählten Start zu einem ausgewählten Ziel führen; Abfragen von Mautgebühren für die ermittelten Streckenführungen von einem Mauterfassungsgerät und Anzeigen der ermittelten Streckenführungen zusammen mit den abgefragten Mautgebühren. Auch bei diesem Verfahren ist vorgesehen, dass ein jeweiliger Bediener eine der errechneten Streckenführungen mittels einer Eingabeeinrichtung auszuwählen hat.

In der deutschen Druckschrift DE 10 2011 014 700 A1 wird ein Navigationsgerät offenbart, das mittels einer Positionsbestimmung und Weginformationen eine Zielführung zu einem wählbaren Zielort, unter Berücksichtigung eingebbarer Mautinformationen umfassender Kriterien ermöglicht, wobei das Navigationsgerät so ausgebildet ist, dass dem Fahrer vor dem Erreichen einer Mautpflichtigen Strecke Informationen zu der mautpflichtigen Strecke und alternativ zu wenigstens einer mautfreien Strecke zur Verfügung gestellt werden. Ferner ist in der Druckschrift offenbart, dass in dem Navigationsgerät ein Nutzerprofil implementiert ist, das von dem Nutzer in der Vergangenheit getroffene Entscheidungen sowie von dem Nutzer eingegebene Vorlieben bzw. Präferenzen berücksichtigt. Ein Abfragen jeweiliger aktueller Termindaten des jeweiligen Nutzers bzw. aktueller Mautkosten eines ggf. auf einer Strecke angeordneten Mautsystems ist in der Druckschrift nicht offenbart.

Die europäische Druckschrift EP 1 659 369 A1 offenbart ein Navigationssystem mit einer Navigationsvorrichtung und einer Mautermittlungsvorrichtung, die zum Mitteilen von Mautnutzerdaten an eine Mautbetreibervorrichtung ausgebildet ist.

Die europäische Druckschrift EP 2 264 401 A1 offenbart ein Verfahren, bei dem in Abhängigkeit von auf einem Streckenabschnitt für durch Brennkraftmaschinen angetriebene Fahrzeuge anfallenden Mautkosten ein elektrischer Antrieb eines Fahrzeugs aktiviert oder eine Umfahrung des Streckenabschnitts berechnet wird.

In der US-amerikanischen Druckschrift US 2002/082771 A1 wird ein Verfahren zur Berechnung einer Streckenführung unter Berücksichtigung eines Reiseprofils eines Nutzers offenbart.

Ein Verfahren zum Auffinden eines Parkbereichs, der in der Nähe eines jeweiligen Zielortes liegt, ist in der US-amerikanischen Druckschrift US 2009/171566 A1 offenbart.

US 2013/0046456 A1 offenbart ein Führungssystem, wobei mehrere alternative multimodale Routen und die entsprechenden Zeitkosten und monetären Kosten in Abhängigkeit von Nutzerdaten, einer zu erwartenden Verkehrslage und anderen Bedingungen (sowie öffentliche Verkehrsmittel und Parken) berechnet werden.

WO 02/071338 A1 offenbart ein Verkehrsleitsystem zur Beeinflussung von Fahrzeugverkehr auf öffentlichen Straßen unter Erhebung von Straßenbenutzungsgebühren oder Maut.

Moderne Mautsysteme wie bspw. ECO-Pass in Milan, ERP in Singapur, CCZ in London oder Stockholm Congestion Tax können ggf. nachfragebedingt in ihren jeweiligen Tarifen schwanken. Ferner sind derartige Metropolen häufig derart hochfrequentiert besucht, dass deren Verkehrsinfrastrukturen überlastet sind, woraus erhebliche Verzögerungen auf einer Streckenführung resultieren. Daraus ergeben sich für eine Planung einer Streckenführung sowohl zeitliche als auch finanzielle Konsequenzen. Um eine für einen jeweiligen Nutzer bestmögliche Streckenführung, die im Hinblick auf Zeit und finanzielle Aspekte optimiert ist, zur Verfügung zu stellen, wird die erfindungsgemäße Vorrichtung bzw. ein entsprechendes Verfahren bereitgestellt.

Die vorliegende Erfindung betrifft eine Vorrichtung zur Berechnung einer Streckenführung für ein Fahrzeug gemäß Anspruch 1.

Unter Streckenkosten sind im Kontext der vorliegenden Erfindung solche Kosten zu verstehen, die mit einer Verwendung von jeweiligen Strecken verbunden sind, d. h. Mautgebühren, Parkplatzkosten sowie jede weitere Art von Kosten, die auf einen Verkehrsteilnehmer beim Benutzen einer jeweiligen Strecke bzw. Straße zukommen.

Unter Nutzerdaten sind im Kontext der vorliegenden Erfindung solche Daten zu verstehen, die einen jeweiligen Nutzer betreffen und für eine jeweilige Streckenführung von Relevanz sind, wie bspw. Termindaten. Es ist vorgesehen, dass die Nutzerdaten sowohl von einem jeweiligen Nutzer selbst zur Verfügung gestellt werden können als auch aktiv von bspw, einem Smartphone oder einer ähnlichen digitalen Verwaltungseinheit ermittelt bzw. angefragt werden können.

Unter einer digitalen Verwaltungsvorrichtung ist im Kontext der vorgestellten Erfindung eine Vorrichtung, wie bspw. ein Smartphone oder ein Server zu verstehen, die einen digitalen Terminkalender umfasst, in dem Einträge zu Terminen des Nutzers hinterlegt sind, die über eine geeignete Schnittstelle, wie bspw. Bluetooth zur Berechnung einer individualisierten Streckenführung zur Verfügung gestellt bzw. ermittelt werden können.

Während bisherige Navigationssysteme alternative Streckenführungen meist als binäre Entscheidungen einem jeweiligen Nutzer zur Verfügung stellen, d. h. dem Nutzer eine Auswahl bereitstellen, in der ein in Echtzeit regelndes Mautsystem in Berechnungen der jeweiligen Streckenführung in der Regel nicht berücksichtigt werden kann, sieht das entsprechende Verfahren eine Prognose einer jeweiligen Verkehrslage über einen bestimmten Zeithorizont vor, anhand derer eine für die jeweilige Streckenführung relevante Verkehrslage sowie ggf. dadurch bedingte Streckenkosten geschätzt bzw. berechnet werden können.

Unter aktuellen Streckenkosten sind Kosten zu verstehen, die zu einem Zeitpunkt zu erwarten sind, zu dem das jeweilige Fahrzeug sich laut Streckenführung in einem kostenpflichtigen Bereich befindet. Die aktuellen Kosten können ermittelt, d. h. abgefragt oder anhand von weiteren Faktoren, wie bspw. Verkehrsdichte und/oder Uhrzeit geschätzt bzw. mittels eines Modells einer jeweiligen zu erwartenden Verkehrssituation berechnet werden.

Da eine jeweilige Verkehrslage jedoch stark von einer jeweiligen Absicht des Nutzers bzw. Fahrers abhängt, wann und wo ein jeweiliger Zielort anzusteuern ist, ist es zwingend erforderlich, jeweilige Motive des Nutzers, d. h. dessen Termine, mit in eine Berechnung zur Streckenführung aufzunehmen.

Durch Verwendung von individuellen Nutzerdaten ist es möglich, Streckenführungen zu kalkulieren, die bei einem gegebenen Zeitfenster bzw. Termin sowohl kostengünstig als auch schnell sind.

Unter Berücksichtigung eines Zeitfensters, in dem ein jeweiliges Ziel zu erreichen ist, können aktuelle bzw. zu erwartende Streckenkosten sowie aktuelle bzw. zu erwartende Verkehrsdaten in eine jeweilige Berechnung der Streckenführung mit einbezogen werden. Entsprechend ist es möglich, einen geeigneten Zeitpunkt für eine bspw. kostengünstige Einfahrt in eine Mautzone zu berechnen.

Es ist ebenfalls denkbar, dass der jeweilige Nutzer ein Abo für einen jeweiligen Mautbereich besitzt, so dass dieser jeweilige Mautbereich ggf. zu im Voraus zu definierenden Zeiten kostengünstig und daher priorisiert angefahren werden kann bzw. soll.

In einer weiteren möglichen Ausgestaltung des entsprechenden Verfahrens ist vorgesehen, dass die Nutzerdaten durch einen Nutzer bereitzustellen sind.

Für eine nutzergebundene und effiziente Streckenführung ist in Ausgestaltung vorgesehen, dass der jeweilige Nutzer einen Termin oder andere, für eine jeweilige Streckenführung relevante Nutzerdaten über ein Nutzerinterface, wie bspw. ein Smartphone oder eine Tastatur, die bspw. auf einem berührungsempfindlichen Bildschirm dargestellt wird, für eine Berechnung der jeweiligen Streckenführung zur Verfügung stellt.

In einer weiteren möglichen Ausgestaltung des entsprechenden Verfahrens ist vorgesehen, dass die Nutzerdaten von einer Datenquelle übertragen bzw. empfangen werden.

Da eine Eingabe von Nutzerdaten durch den Nutzer selbst häufig zeitaufwendig und ggf. umständlich zu handhaben ist, ist vorgesehen, dass jeweilige relevante Nutzerdaten von einer Datenquelle für eine Berechnung der jeweiligen Streckenführung zur Verfügung gestellt werden können. Dies umfasst bspw. ein Übertragen der Nutzerdaten von einem Smartphone über eine drahtlose Kommunikationsschnittstelle, wie bspw. WLAN, 3G, oder LTE und/oder ein Übertragen von Nutzerdaten über das Internet. Auf diese Weise ist es möglich, die jeweilige Streckenführung mit einem Kalender in bspw. einem E-Mailfach oder einem Smartphone zu synchronisieren bzw. abzugleichen und die entsprechenden Daten einer Recheneinheit zur Berechnung der jeweiligen Streckenführung zur Verfügung zu stellen.

In einer weiteren möglichen Ausgestaltung des entsprechenden Verfahrens ist vorgesehen, dass die Nutzerdaten sowie Daten zur Streckenführung über ein Datennetzwerk übertragen werden.

Um Daten zur Berechnung der jeweiligen Streckenführung zusammenzuführen bzw. dem jeweiligen Nutzer zu präsentieren, d. h. darzustellen, ist vorgesehen, dass die Daten über ein Datennetzwerk wie bspw. das Internet, eine WLAN-Schnittstelle, eine Bluetoothverbindung oder jedes weitere technisch geeignete Datennetzwerk an die erfindungsgemäße Vorrichtung bzw. eine zur Berechnung der jeweiligen Streckenführung vorgesehene Recheneinheit übertragen werden. Dabei kann auch vorgesehen sein, dass die jeweilige Streckenführung an ein in einem jeweiligen Fahrzeug angeordnetes Navigationsgerät übertragen und auf bzw. von dem Navigationsgerät dargestellt wird.

In einer weiteren möglichen Ausgestaltung des entsprechenden Verfahrens ist vorgesehen, dass die Streckenführung für minimale Streckenkosten optimiert wird.

Um dem Nutzer ein möglichst kostengünstiges Reisen zu ermöglichen, ist vorgesehen, dass die Streckenführung dahingehend optimiert wird, dass jeweilige Streckenkosten minimiert werden, so dass ggf. eine längere Fahrtzeit bzw. Reisedauer akzeptiert wird, um die Streckenkosten zu senken bzw. zu minimieren.

In einer weiteren möglichen Ausgestaltung des entsprechenden Verfahrens ist vorgesehen, dass die Streckenführung für eine minimale Fahrtzeit optimiert wird.

Im Falle eines dringenden Termins kann es ggf. sinnvoll erscheinen, dass eine Streckenführung unabhängig von jeweiligen Streckenführungskosten ausschließlich für eine minimale Fahrzeit optimiert wird.

In einer weiteren möglichen Ausgestaltung des entsprechenden Verfahrens ist vorgesehen, dass die Streckenführung zusätzlich für minimale Betriebskosten des Fahrzeugs optimiert wird.

Um jeweilige Gesamtkosten einer Reise bzw. Fahrt zu minimieren, sind nicht nur Streckenkosten entscheidend, sondern ebenfalls Betriebskosten des jeweiligen Fahrzeugs. Um die Betriebskosten zu reduzieren kann es ggf. sinnvoll erscheinen, dass eine Streckenführung an jeweilige Fahrzeugcharakteristika, wie bspw. ein Fahrzeuggewicht angepasst wird. So kann es bei schweren Fahrzeugen, wie bspw. LKWs sinnvoll erscheinen, dass Streckenführungen mit zahlreichen langen oder schweren Anstiegen zugunsten einer mautpflichtigen Straße vermieden werden.

In einer weiteren möglichen Ausgestaltung des entsprechenden Verfahrens ist vorgesehen, dass die Streckenführung in Abhängigkeit einer Priorität von Nutzerdaten entweder für eine minimale Fahrzeit oder für minimale Streckenkosten optimiert wird.

Während ein jeweiliger Nutzer in der Regel eher kostengünstigen Streckenführungen bzw. Routen folgt, kann es ggf. sinnvoll erscheinen, bspw. im Falle eines spontanen dringenden Termins, eine jeweilige Fahrtzeit der Streckenführung zu minimieren. Entsprechend ist es sinnvoll, in Abhängigkeit jeweiliger Termine bzw. Nutzerdaten eine Streckenführung entweder fahrzeitoptimiert oder streckenkostenoptimiert zu gestalten. Wird eine jeweilige Streckenplanung bzw. Streckenberechnung frühzeitig durchgeführt und besteht demnach ein großes Zeitfenster zur Durchführung der jeweiligen Fahrt, ist auch ein Kompromiss aus einer kostengünstigen und einer fahrzeitoptimierten Streckenführung denkbar, in der nur dann kostenpflichtige Streckenführungen mit einbezogen werden, wenn diese ein signifikantes Potential zur Einsparung von Fahrzeit bieten.

In einer weiteren möglichen Ausgestaltung des entsprechenden Verfahrens ist vorgesehen, dass die Streckenführung in Abhängigkeit eines durch den Nutzer festgelegten maximalen Budgets für die Streckenkosten berechnet wird.

Es ist weiterhin denkbar, dass, um einen jeweiligen Kompromiss aus Fahrtzeit und Streckenkosten an einen jeweiligen Nutzer anzupassen, ein Budget durch den Nutzer vorgegeben werden kann, innerhalb dessen Streckenkosten für eine jeweilige Streckenführung vergütet werden können, so dass die jeweilige Streckenführung ein von dem Nutzer bereitgestelltes Budget für die Streckenkosten und/oder Betriebskosten des Fahrzeugs nicht übersteigt.

In Ausgestaltung kann das entsprechende Verfahren eine Bezahloption umfassen, mittels derer jeweilige anfallende Streckenkosten im Voraus von einem bereitzustellenden Konto des jeweiligen Nutzers abgebucht werden.

In einer weiteren möglichen Ausgestaltung des entsprechenden Verfahrens ist vorgesehen, dass die für einen jeweiligen Zeitraum individuell zu ermittelnden aktuellen Streckenkosten über definierte Zeitzyklen ermittelt werden.

Es ist vorgesehen, dass jeweilige Preise eines jeweiligen Mautsystems entweder online abgerufen werden, mittels anderer Kommunikationstechnologien wie bspw. WLAN, Bluetooth, DSRC oder ähnlichem einem jeweiligen System kommuniziert werden können oder fest über bestimmte Zeitzyklen innerhalb des jeweiligen Systems gespeichert sind. Durch gespeicherte Zeitzyklen können jeweilige aktuelle Preise eines jeweiligen Mautsystems ggf. berechnet und für eine jeweilige Streckenführung verwendet werden.

In einer weiteren möglichen Ausgestaltung des entsprechenden Verfahrens ist vorgesehen, dass die Streckenführung an einem Computer, bspw. über das Internet oder ein entsprechendes Programm berechnet und anschließend zu dem jeweiligen Fahrzeug bzw. der erfindungsgemäßen Vorrichtung übertragen wird.

Der Computer zur Berechnung der Streckenführung kann sowohl an einem Ort außerhalb eines jeweiligen Fahrzeugs als auch in dem jeweiligen Fahrzeug, d. h. als Steuergerät, verbaut sein.

In einer weiteren möglichen Ausgestaltung des entsprechenden Verfahrens wird die Streckenführung auf eigens für das entsprechende Verfahren bereitzustellendem Kartenmaterial bereitgestellt und/oder berechnet Ferner betrifft die vorliegende Erfindung eine Vorrichtung zur Berechnung einer Streckenführung für ein ein Fahrzeug gemäß Anspruch 1.

Die erfindungsgemäße Vorrichtung ist konfiguriert, um Daten bspw. von einem Smartphone eines Nutzers zu empfangen, diese zu verarbeiten und für eine Berechnung einer Streckenführung zu verwenden. Dabei kann die Berechnung der Streckenführung sowohl von einer von der erfindungsgemäßen Vorrichtung umfassten Recheneinheit selbst als auch von einer weiteren externen Recheneinheit, wie bspw. einem Server vollzogen werden, wobei die von dem Server durchgeführten Berechnungen über eine Drahtloskommunikation wie bspw. 3G, LTE, WLAN, Bluetooth oder jedem weiteren technisch geeigneten Verfahren zur Datenkommunikation an die erfindungsgemäße Vorrichtung übertragen werden können. Sobald die jeweiligen Berechnungen zur Streckenführung abgeschlossen sind und von der erfindungsgemäßen Vorrichtung ggf. empfangen wurden, kann die jeweilige berechnete Streckenführung ggf. mit jeweiligen Nutzerdaten abgeglichen und auf einem Anzeigemedium, wie bspw. einem Bildschirm, insbesondere einem berührungsempfindlichen Bildschirm vom Typ LCD, TFT, LED oder jedem weiteren technisch geeigneten Bildschirmtyp angezeigt werden.

In einer weiteren möglichen Ausgestaltung der erfindungsgemäßen Vorrichtung ist vorgesehen, dass auf der Vorrichtung Kartenmaterial bzw. Daten von Karten gespeichert sind, die zur Berechnung und/oder Bereitstellung einer jeweiligen Streckenführung verwendet werden können.

Erfindungsgemäß ist vorgesehen, dass die Vorrichtung einen Rückkanal zur Kommunikation mit einem Datennetzwerk umfasst, wobei die Vorrichtung für eine Übertragung von Daten zu dem Datennetzwerk zu mindestens einer statistischen Größe der folgenden Liste von statistischen Größen zur Auswertung von einem Mautsystem konfiguriert ist: bisheriges Verhalten des Nutzers, Navigationsziele, Termine von einem Terminkalender des Nutzers.

Durch einen Rückkanal zur Kommunikation mit einem jeweiligen Datennetzwerk, wie bspw. einem Mautsystem, ist es möglich, dass das Mautsystem selbst von einer jeweiligen Berechnung der Streckenführung profitiert, in dem die jeweilige Streckenführung bzw. von der jeweiligen Streckenführung umfasste Nutzerdaten ausgewertet und zur Steuerung bzw. Preisbildung des Mautsystems verwendet werden. Es ist denkbar, dass das jeweilige Mautsystem eine Datenübertragung über den Rückkanal durch bspw. geringere Streckenkosten für den jeweiligen Nutzer bzw. das jeweilige Fahrzeug honoriert. Durch eine Analyse der übermittelten Daten sowie eine an die Analyse angepasste Verkehrsregelung ist es dem Mautsystem ggf. möglich, auf einen Schadstoffausstoß von einzelnen Fahrzeugen zu reagieren und einen Verkehrsfluss zu erhöhen bzw. zu drosseln.

In einer möglichen Ausgestaltung der erfindungsgemäßen Vorrichtung ist vorgesehen, dass die Vorrichtung zum Datenaustausch mit einer externen Recheneinheit, wie bspw. einem in dem jeweiligen Fahrzeug angeordneten Navigationsgerät konfiguriert ist.

Durch eine Verbindung der erfindungsgemäßen Vorrichtung mit einem jeweiligen bspw. in einem jeweiligen Fahrzeug angeordneten Navigationsgerät ist es möglich, eine jeweilige Funktionalität des Navigationsgeräts um eine Funktionalität des entsprechenden Verfahrens bzw. der erfindungsgemäßen Vorrichtung zu erweitern und Streckenführungen in Abhängigkeit von jeweiligen Nutzerdaten bzw. Streckenkosten oder Betriebskosten des jeweiligen Fahrzeugs zu optimieren.

Weitere Vorteile und Ausgestaltungen der Erfindung ergeben sich aus der Beschreibung und der beiliegenden Zeichnung.

Die Erfindung ist anhand einer Ausführungsform in der Zeichnung schematisch dargestellt und wird unter Bezugnahme auf die Zeichnung schematisch und ausführlich beschrieben.

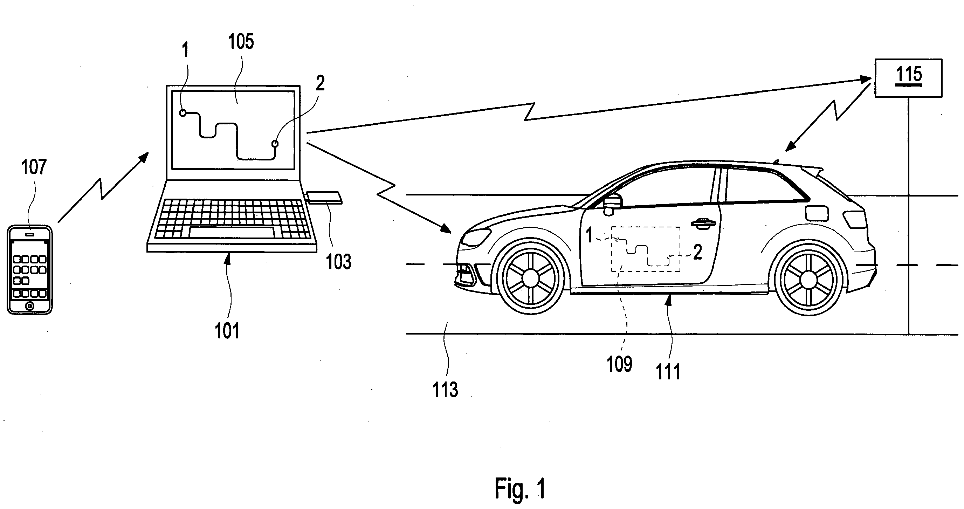

Figur 1 zeigt eine mögliche Ausgestaltung der erfindungsgemäßen Vorrichtung.

Die in Figur 1 dargestellte Vorrichtung umfasst einen Computer 101 mit einem Rechenmodul zur Berechnung einer Streckenführung sowie ein an den Computer angeschlossenes Empfangsmodul 103 für elektronische Daten. Ein Nutzer bedient, um eine Reise zu planen, den Computer 101 und fordert eine Streckenführung von einem Startpunkt 1 zu einem Zielpunkt 2 an, wie auf einem Display 105 des Computers 101 dargestellt, wobei der Computer ggf. auch direkt in dem Fahrzeug 111, d. h. als Steuergerät integriert sein kann. Um die Streckenführung für jeweilige Anforderungen des Nutzers zu berechnen, werden Nutzerdaten des Nutzers über dessen Terminkalender ermittelt, d. h. an einem Mobiltelefon 107 des Nutzers angefragt, woraufhin das Mobiltelefon 107 einen Termin in drei Stunden am Zielort 2 an den Computer 101 übermittelt.

Dem Nutzer steht demzufolge ein dreistündiges Zeitfenster zum Erreichen des Zielorts 2 zur Verfügung. Da der Nutzer beim Anfragen der Streckenführung bereits mitgeteilt hat, dass eine möglichst kostengünstige Streckenführung gewünscht wird, wird eine Streckenführung gesucht, die frei von mautpflichtigen Straßen ist. Da eine solche Streckenführung jedoch außerhalb des ermittelten dreistündigen Zeitfensters liegt, wird dem Nutzer eine Streckenführung empfohlen, die eine kurze Passage auf einer mautpflichtigen Straße 113 vorsieht, diese Passage eine Reisedauer jedoch derart reduziert, dass die Reisedauer sich auf unter drei Stunden reduziert.

Die vorgeschlagene Streckenführung wird von dem Nutzer akzeptiert und sodann auf ein Navigationsgerät 109 eines Fahrzeugs 111 übertragen. Um jeweilige Streckenkosten zu reduzieren, übermittelt das Navigationsgerät 109,sobald sich das Fahrzeug 111 auf der erwähnten mautpflichtigen Straße 113 befindet, nutzer- und fahrtenspezifische Daten an eine Mautstation 115, die im Gegenzug anfallende Streckenkosten für das Fahrzeug 111 reduziert. Ferner übermittelt das Mautsystem 115 sowohl an das Fahrzeug 111 als auch an weitere auf der mautpflichtigen Straße 113 fahrende Fahrzeuge Informationen zur Regulierung eines Verkehrsflusses sowohl auf der mautpflichtigen Straße 113 als auch auf folgenden, mit der mautpflichtigen Straße 113 verbundenen Straßen, wobei die übermittelten Informationen mindestens teilweise auf den von dem Navigationsgerät 109 übermittelten Daten beruhen.

## Patentansprüche

1. System zur Berechnung einer Streckenführung für ein Fahrzeug (111), wobei das System eine Vorrichtung, ein Navigationsgerät des Fahrzeugs, und ein Datennetzwerk umfasst, wobei das Datennetzwerk ein Mautsystem umfasst, wobei die Vorrichtung mit einer Recheneinheit (101) und einer Einheit (107) zum Empfang von Nutzerdaten ausgestattet ist, welche Vorrichtung mit dem Navigationsgerät (109) des Fahrzeugs (111) verbunden und zum Datenaustausch mit dem Navigationsgerät (109) konfiguriert ist, wobei die Vorrichtung zur Berechnung der Streckenführung in Abhängigkeit von für einen jeweiligen Zeitraum durch die Recheneinheit (101) individuell berechneten Streckenkosten und Betriebskosten des Fahrzeugs (111) sowie einer in Abhängigkeit von Nutzerdaten definierten Zeitperiode zum Erreichen eines jeweiligen Ziels (2) und einer Prognose einer jeweiligen Verkehrslage konfiguriert ist, wobei die berechnete Streckenführung auf einem Anzeigemedium anzeigbar ist, und wobei die Recheneinheit (101) ferner dazu konfiguriert ist, anhand der Prognose durch die jeweilige Verkehrslage bedingte Streckenkosten auf Grundlage eines Modells der jeweiligen zu erwartenden Verkehrslage unter Berücksichtigung einer Uhrzeit und einer Verkehrsdichte zu berechnen und einem Nutzer eine im Hinblick auf Zeit und finanzielle Aspekte optimierte Streckenführung zur Verfügung zu stellen, wobei die Vorrichtung über einen Rückkanal zur Kommunikation mit dem Datennetzwerk verfügt, wobei die Vorrichtung für eine Übertragung von Daten des Navigationsgeräts (109) zu dem Datennetzwerk zur Auswertung mindestens einer statistischen Größe durch das Mautsystem (115) konfiguriert ist und die Vorrichtung ferner dazu konfiguriert ist, von dem Mautsystem (115) Informationen zur Regulierung eines Verkehrsflusses auf einer mautpflichtigen Straße (113) und auf folgenden, mit der mautpflichtigen Straße (113) verbundenen Straßen zu empfangen, wobei die übermittelten Informationen zumindest teilweise auf den von dem Navigationsgerät (109) an das Mautsystem (115) übermittelten Daten beruhen, **dadurch gekennzeichnet, dass** die Vorrichtung für eine Übertragung zu dem Datennetzwerk von Daten zu mindestens einer statistischen Größe der folgenden Liste von statistischen Größen zur Auswertung von dem Mautsystem (115) konfiguriert ist: bisheriges Verhalten des Nutzers, Navigationsziele, Termine von einem Terminkalender des Nutzers.

## Claims

1. System for calculating a route for a vehicle (111), wherein the system comprises a device, a navigation unit of the vehicle, and a data network, wherein the data network comprises a toll system, wherein the device is equipped with a computing unit (101) and a unit (107) for receiving user data, which device is connected to the navigation unit (109) of the vehicle (111) and configured for data exchange with the navigation unit (109), wherein the device is configured to calculate the route as a function of route costs and operating costs of the vehicle (111) individually calculated by the computing unit (101) for a respective period and as a function of a time period which is required to reach a respective destination (2) and is defined as a function of user data, and a forecast of a respective traffic situation, wherein the calculated route can be displayed on a display medium, and wherein the computing unit (101) is further configured to calculate route costs caused by the respective traffic situation on the basis of a model of the respective expected traffic situation, taking into account a time of day and a traffic density, and to provide a user with a route that is optimised with regard to time and financial aspects, wherein the device has a return channel for communication with a data network, wherein the device is configured for a transmission of data from the navigation unit (109) to the data network for evaluation of at least one statistical variable by the toll system (115) and the device is further configured to receive information from the toll system (115) for regulating a traffic flow on a toll road (113) and on subsequent roads connected to the toll road (113), wherein the transmitted information is at least partially based on the data transmitted by the navigation unit (109) to the toll system (115), **characterised in that** the device is configured for a transmission to the data network of data relating to at least one statistical variable from the following list of statistical variables for evaluation of the toll system (115): previous behaviour of the user, navigation destinations, appointments from an appointment calendar of the user.

## Revendications

1. Système de calcul d'un guidage routier pour un véhicule (111), dans lequel le système comprend un dispositif, un appareil de navigation du véhicule, et un réseau de données, dans lequel le réseau de données comprend un système de péage, dans lequel le dispositif est équipé d'une unité de calcul (101) et d'une unité (107) destinée à la réception de données d'utilisateur, ledit dispositif étant relié à l'appareil de navigation (109) du véhicule (111) et étant configuré pour l'échange de données avec l'appareil de navigation (109), dans lequel le dispositif est configuré pour le calcul du guidage routier en fonction de coûts de trajet et de coûts d'exploitation du véhicule (111), calculés de manière individuelle par l'unité de calcul (101) pour un intervalle de temps donné, ainsi que d'une durée définie en fonction de données d'utilisateur et nécessaire pour atteindre une destination (2) donnée et d'une prévision d'une situation de trafic respective, dans lequel le guidage routier calculé peut être affiché sur un support d'affichage, et dans lequel l'unité de calcul (101) est en outre configurée pour, à l'aide de la prévision, calculer des coûts de trajet conditionnés par la situation de trafic respective sur la base d'un modèle de la situation de trafic attendue respective, en prenant en considération un horaire et une densité de trafic, et pour mettre à disposition d'un utilisateur un guidage routier optimisé en termes de temps et d'aspects financiers, dans lequel le dispositif dispose d'un canal de retour pour la communication avec le réseau de données, dans lequel le dispositif est configuré pour une transmission de données de l'appareil de navigation (109) vers le réseau de données en vue de l'évaluation d'au moins une variable statistique par le système de péage (115) et le dispositif est en outre configuré pour recevoir du système de péage (115) des informations destinées à la régulation d'un flux routier sur une route à péage (113) et sur des routes consécutives reliées à la route à péage (113), dans lequel les informations transmises reposent au moins en partie sur les données transmises de l'appareil de navigation (109) vers le système de péage (115), **caractérisé en ce que** le dispositif est configuré pour transmettre au réseau de données des données concernant au moins une variable statistique de la liste ci-dessous de variables statistiques en vue d'une évaluation par le système de péage (115) : comportement antérieur de l'utilisateur, destinations de navigation, rendez-vous issus d'un calendrier de rendez-vous de l'utilisateur.
